# EUROPÄISCHE PATENTANMELDUNG

(11) **EP 4 804 127 A1**
(43) Veröffentlichungstag der Anmeldung: **09.09.2026**
(21) Anmeldenummer: 26157392.7
(22) Anmeldetag: 10.02.2026
(51) Int. Cl.: G06T 7/73

(54) **VERFAHREN ZUR ERFASSUNG EINER POSE EINES TIEFENSENSORS**

(30) Priorität: 03.03.2025 DE 102025107910
(71) Anmelder: SICK AG, 79183 Waldkirch (DE)
(72) Erfinder: Schott, Michael, 79115 Freiburg (DE); Kadiyam, Sandeep, 79104 Freiburg im Breisgau (DE); Gebauer, Jens, 79183 Waldkirch (DE)
(74) Vertreter: Manitz Finsterwald Patent- und Rechtsanwaltspartnerschaft mbB

(57) **Zusammenfassung**

Die Erfindung bezieht sich auf ein Verfahren zur Erfassung einer Pose zumindest eines Tiefensensors, welches umfasst, dass: ein virtuelles Abbild einer realen Umgebung in Form einer virtuellen Punktwolke erstellt wird, mittels eines ersten Tiefensensor ein erster Bereich der realen Umgebung erfasst und eine zugehörige erste Punktwolke erstellt wird, die virtuelle Punktwolke mit der ersten Punktwolke verglichen wird und basierend auf dem Vergleich eine Pose des ersten Tiefensensors ermittelt wird.

## Beschreibung

Die Erfindung bezieht sich auf ein Verfahren und eine Vorrichtung zur Erfassung einer Pose zumindest eines Tiefensensors.

Systeme zur Erfassung der Umgebung finden in einer Vielzahl von Anwendungen Einsatz, bei denen es häufig notwendig ist, mehrere Tiefensensoren zu verwenden, um das gesamte relevante Gebiet zu erfassen. Dabei werden die von den Tiefensensoren detektierten Daten zunächst in deren jeweiligem lokalen Koordinatensystem erfasst. In vielen Fällen ist jedoch die Position und Orientierung der Tiefensensoren relativ zu einem globalen Koordinatensystem von Interesse, insbesondere wenn mehrere Tiefensensoren in einem gemeinsamen Rahmen eingebunden sind. Die exakte Bestimmung der Pose, d.h. der Position und Ausrichtung, eines jeweiligen Tiefensensors stellt eine wesentliche Voraussetzung dar, um die erfassten Daten in ein gemeinsames Koordinatensystem zu übertragen.

Bisherige Ansätze zur Bestimmung der Tiefensensorpose sind darauf ausgelegt, die Pose eines Tiefensensors durch den Abgleich von gemessenen Bildpunkten mit bekannten Referenzpunkten zu bestimmen. Andere Verfahren nutzen die Extraktion von Merkmalen und Homographie-Berechnung dazu, die relative Pose von Tiefensensoren basierend auf Bilddaten zu bestimmen.

Die bestehenden Verfahren weisen jedoch wesentliche Einschränkungen auf. Eine häufige Voraussetzung ist nämlich, dass die Tiefensensoren über ein gemeinsames Sichtfeld verfügen, was in der Praxis nicht immer realisierbar ist.

Insbesondere bei großflächigen Anwendungen oder komplexen Szenarien können solche überlappenden Bereiche fehlen.

Es besteht also Bedarf an einem verbesserten Verfahren zur Erfassung der Pose von Tiefensensoren, welches die vorstehenden Probleme adressiert. Es ist eine Aufgabe der Erfindung ein solches Verfahren bereitzustellen.

Diese Aufgabe wird durch den Gegentand des Anspruchs 1 gelöst.

Ein erster Aspekt der Erfindung betrifft ein Verfahren zur Erfassung einer Pose zumindest eines Tiefensensors, welches umfasst, dass:
ein virtuelles Abbild einer realen Umgebung in Form einer virtuellen Punktwolke erstellt wird,
mittels eines ersten Tiefensensor ein erster Bereich der realen Umgebung erfasst und eine zugehörige erste Punktwolke erstellt wird,
die virtuelle Punktwolke mit der ersten Punktwolke verglichen wird und basierend auf dem Vergleich eine Pose des ersten Tiefensensors ermittelt wird.

Die Erfindung geht von dem Grundgedanken aus, dass eine virtuelle Abbildung der realen Umgebung als Referenzabbildung dienen kann, um diese mit einem erfassten Bereich des ersten Tiefensensor bzw. mit den entsprechenden 3D-Tiefensensordaten zu vergleichen. Basierend auf dem Vergleich kann beispielswiese festgestellt werden, in welchem Maße sich die erste Punktwolke von der virtuellen Punktwolke unterscheidet und/oder in welchem Maße sich die erste Punktwolke und die virtuelle Punktwolke ähneln. Das Maß und/oder die Art der Abweichung und/oder Ähnlichkeit kann anschließend genutzt werden, um eine Pose, d.h. die Position und/oder Ausrichtung, des ersten Tiefensensors zu ermitteln. Die virtuelle Abbildung kann somit als eine Art Referenz verwendet werden. Vorteilhafterweise benötigt es für die Ermittlung der Pose keine zusätzlichen Elemente oder Hilfsmittel wie beispielsweise Marker. Die Ermittlung der Pose kann ausschließlich basierend auf den erfassten Tiefensensordaten erfolgen.

Das virtuelle Abbild entspricht insbesondere einer virtuellen 3D-Darstellung der realen Umgebung. Die virtuelle Abbildung kann dabei jegliche Objekte in dem Erfassungsbereich des Tiefensensors und darüber hinaus umfassen. Falls es sich bei der Umgebung um einen Innenbereich handeln sollte, können dabei auch Raumgrenzen wie Wände und Decken umfasst sein. Das virtuelle Abbild wird insbesondere auf Basis eines Grundkoordinatensystems erstellt, d.h. die Koordinaten der Punkte der virtuellen Punktwolke beziehen sich auf das Grundkoordinatensystem. Grundsätzlich stimmen das Koordinatensystem des ersten Tiefensensors und das Grundkoordinatensystem nicht überein. Vorzugsweise wird die Pose des ersten Tiefensensors in Bezug auf das Grundkoordinatensystem ermittelt. Anders ausgedrückt, wird die räumliche Beziehung zwischen dem Grundkoordinatensystem und dem Koordinatensystem des ersten Tiefensensors ermittelt, um hierdurch die Pose des Tiefensensors festzustellen.

Wie bereits beschrieben, wird das virtuelle Abbild der realen Umgebung sowie die erfassten Tiefensensordaten in Form einer Punktwolke erzeugt. Insbesondere können beliebig viele Raumpunktdaten als Teil der jeweiligen Punktwolke abgebildet werden. Die Auflösung und Dichte der Punktwolke kann dabei je nach Bedarf eingestellt werden. Eine Punktwolke ist eine Sammlung von Datenpunkten, die typischerweise in einem dreidimensionalen Raum angeordnet sind. Jeder Datenpunkt kann durch seine räumliche Position in Form von Koordinaten (z.B.: x, y, z, Kugelkoordinaten oder einem beliebigen orthogonalen Koordinatensystem) beschrieben werden.

Neben den räumlichen Koordinaten kann eine Punktwolke auch zusätzliche Informationen umfassen, wie etwa Farbwerte (RGB), Intensitätswerte, Normalenvektoren oder Klassifizierungsmerkmale, die spezifische Eigenschaften der einzelnen Punkte beschreiben. Diese Zusatzinformationen erweitern die Analysemöglichkeiten und ermöglichen eine genauere Darstellung der erfassten Szene. Anomalien bzw. Ausreißer innerhalb der Punktwolke, welche durch Messfehler, Rauschen oder ungenaue Tiefensensoren entstehen, können dabei unter Verwendung eines Outlier-Elimination-Filters wie dem Statistical-Outlier-Removal (SOR) erkannt und entfernt werden.

Der Tiefensensor kann jede Art von 3D-Tiefensensor, z.B. ein LIDAR-Tiefensensor, ein Laserscanner oder eine Stereokamera, sein, der in der Lage ist, Tiefendaten zu generieren.

Weitere Ausführungsformen der Erfindung sind der Beschreibung, den Unteransprüchen und den Zeichnungen zu entnehmen.

Gemäß einer ersten Ausführungsform wird die virtuelle Punktwolke im Wesentlichen basierend auf vorgegebenen Informationen über die reale Umgebung erstellt. Zur Erstellung der virtuellen Punktwolke können z.B. vorab bekannte, vorgegebene Informationen wie die geometrischen Eigenschaften von Objekten, ihre Positionen und Abmessungen oder sogar vollständige 3D-Modelle genutzt werden. Diese Informationen dienen als Grundlage, um eine Punktwolke synthetisch oder teilweise synthetisch zu erzeugen, ohne dass Daten direkt von einem Tiefensensor aufgenommen werden müssen.

Gemäß einer Ausführungsform umfassen die vorgegebenen Informationen über die reale Umgebung Planungsdaten für eine Industriemaschine. Bei der Industriemaschine kann es sich beispielsweise um eine Industriemaschine zur Herstellung, Bearbeitung, Sortierung und/oder Verpackung von Gegenständen handeln. Die Industriemaschine kann mehrere Segmente umfassen, beispielsweise ein Segment zum Transport der Gegenstände, ein weiteres Segment zum Scannen der Gegenstände und ein anderes Segment zum Bearbeiten der Gegenstände. Die Industriemaschine kann dabei auch eine Vielzahl von, insbesondere zusammenwirkenden, Segmenten aufweisen und dementsprechend auch als Industrieanlage bezeichnet werden. Die Industrieanlage kann z.B. einen Teil einer Fabrikhalle oder eine gesamte Fabrikhalle ausfüllen. Die Segmente können jeweils eine charakteristische Form aufweisen, die einen guten Vergleich und/oder eine eindeutige Zuordnung zwischen der virtuellen Punktwolke und der ersten (und zweiten) Punktwolke ermöglichen.

Gemäß einer weiteren Ausführungsform umfasst das Verfahren das Herstellen der Industriemaschine gemäß den Planungsdaten für die Industriemaschine und/oder das Anbringen des ersten Tiefensensors (und ggf. auch des später noch erwähnten zweiten Tiefensensors) an oder bei der Industriemaschine. Der erste Tiefensensor oder die Tiefensensoren können derart angebracht sein, dass zumindest ein Teil der erfassten realen Umgebung durch die Industriemaschine gebildet wird. Die reale Umgebung kann dementsprechend die Industriemaschine umfassen. Die Herstellung der Industriemaschine kann zeitlich gesehen, insbesondere beliebig weit, vor den anderen Verfahrensschritten liegen.

Für diese Ausführungsform ist vorteilhaft, dass moderne Industriemaschinen häufig in einer virtuellen Umgebung geplant werden, beispielsweise in einem CAD-Programm oder in einem Tool wie Omniverse von Nvidia. Dadurch können sowohl die Struktur des Gebäudes für die Industrieanlage aber auch die zur Industrieanlage gehörenden Maschinen, Möbel und dergleichen bekannt sein und insbesondere Teil der vorgegebenen Informationen über die reale Umgebung sein. Die so virtuell verfügbaren Daten weichen üblicherweise nur minimal von der späteren realen Implementierung beim Bau bzw. bei der Herstellung der (realen) Industriemaschine ab.

Um die Punktwolke synthetisch oder teilweise synthetisch zu erzeugen, werden die vorgegebenen Informationen über die reale Informationen in ein definiertes Koordinatensystem übertragen. Anschließend werden diskrete Punkte generiert, die die Oberfläche oder Geometrie der Objekte innerhalb der Umgebung repräsentieren. Diese Punkte werden anhand der bekannten Merkmale, wie beispielsweise Konturlinien, Konturflächen, Oberflächenbeschaffenheit oder vordefinierter Abstände, definiert.

Das Verfahren kann mit zusätzlichen Messdaten ergänzt werden, beispielsweise von Tiefensensoren oder LIDAR-Systemen, um die synthetische Punktwolke zu validieren oder zu erweitern. Dies ist besonders nützlich in Szenarien, in denen nur Teile der Umgebung bekannt sind, während andere Bereiche durch direkte Messungen erfasst werden müssen.

Der Vorteil eines solchen Ansatzes besteht darin, dass durch die Verwendung vorgegebener Daten eine initiale Punktwolkenrepräsentation ermöglicht wird, die als Ausgangspunkt für weitere Verarbeitungs- oder Registrierungsverfahren dienen kann.

Gemäß einer Ausführungsform wird mittels eines zweiten Tiefensensors ein zweiter Bereich der realen Umgebung erfasst und eine zugehörige zweite Punktwolke erstellt, wobei die virtuelle Punktwolke mit der zweiten Punktwolke verglichen wird und basierend auf dem Vergleich eine Pose des zweiten Tiefensensors ermittelt wird, wobei sich der erste Bereich und der zweite Bereich vorzugsweise nicht oder nur teilweise überlagern. Die Ermittlung der Pose des zweiten Tiefensensors kann somit unabhängig von der Pose des ersten Tiefensensors ermittelt werden. Dies ist insbesondere dadurch möglich, dass die virtuelle Abbildung als Referenz dient, wobei die virtuelle Punktwolke die gesamte Umgebung und somit sowohl den (bevorzugt vollständigen) Erfassungsbereich des ersten als auch des zweiten Tiefensensor umfasst. Anders als konventionelle Verfahren zur Erfassung einer Tiefensensorpose ist es insbesondere nicht notwendig, dass sich die Sichtfelder der beiden Tiefensensoren überschneiden, um beispielsweise einen vorgegebenen Referenzpunkt, welcher in dem überschneidenden Sichtbereich angeordnet ist, für die Posenbestimmung zu verwenden. Das Verfahren ist damit deutlich einfacher umsetzbar und gleichzeitig weniger anfällig für Fehler. Grundsätzlich können sich die beiden durch die Tiefensensoren erfassten Bereich jedoch auch überschneiden. Die Wirksamkeit des Verfahrens wird hierdurch nicht eingeschränkt.

Es versteht sich, dass zusätzlich zu dem zweiten Tiefensensor auch noch weitere Tiefensensoren auf die oben beschriebene Art eingesetzt werden können.

Gemäß einer Ausführungsform umfasst der Vergleich, dass für die erste und/oder zweite Punktwolke ein jeweils kongruenter Teil der virtuellen Punktwolke ermittelt wird, wobei basierend auf dem ermittelten kongruenten Teil zumindest ein Transformationsparameter ermittelt wird, wobei basierend auf dem Transformationsparameter eine Pose des ersten und/oder zweiten Tiefensensors ermittelt wird. Kongruenz kann hierbei bedeuten, dass die Punktanordnungen nahezu identisch sind, aber möglicherweise eine Transformation basierend auf einem Transformationsparameter wie z.B. einer Drehung, einer Spiegelung oder einer Verschiebung erforderlich ist, um die eine Punktwolke in die andere zu überführen. Anders ausgedrückt, ist der kongruente Teil dadurch gekennzeichnet, dass der kongruente Teile der virtuellen Punktwolke und die erste und/oder zweite Punktwolke die gleiche Struktur und denselben Abstand zwischen den Punkten haben, jedoch nicht unbedingt an der gleichen Stelle oder in der gleichen Orientierung im Raum liegen.

Gemäß einer Ausführungsform wird die Pose des ersten und/oder zweiten Tiefensensors mittels einer Punktwolkenregistrierung zwischen der virtuellen Punktwolke und der jeweiligen ersten Punktwolke und/oder zweiten Punktwolke ermittelt. Die Punktwolkenregistrierung umfasst den Prozess, dass mehrere Punktwolken miteinander in Einklang gebracht werden, um eine vollständige 3D-Darstellung zu erzeugen. Hierbei kann zunächst eine grobe Ausrichtung der jeweiligen Punktwolken durchgeführt werden, indem bekannte Merkmale oder gemeinsame Punkte der zu vergleichenden Punktwolken verwendet werden. Dies kann manuell oder automatisch erfolgen, zum Beispiel durch Merkmalsextraktion oder anhand bekannter Geometrien. Die Punktwolken können anschließend anhand von Algorithmen wie dem Iterative Closest Point (ICP)-Verfahren feiner ausgerichtet werden. ICP verfeinert beispielsweise die Position der Punktwolken, indem es iterativ die Abstände zwischen den Punkten der unterschiedlichen Wolken minimiert. Dabei können die Koordinaten der Punkte aus den verschiedenen Punktwolken in ein gemeinsames Koordinatensystem transformiert werden. Die resultierende Transformation besteht aus einer Translation (Verschiebung) und einer Rotation (Ausrichtung oder Drehung), wobei basierend auf der ermittelten notwendigen Translation und Rotation die Pose des jeweiligen Tiefensensors ermittelt werden kann. Anders ausgedrückt, wird eine Abweichung der erfassten ersten und/oder zweiten Punktwolke von der virtuellen Punktwolke ermittelt und basierend auf der Abweichung die Pose des ersten und/oder zweiten Tiefensensors ermittelt.

Gemäß einer Ausführungsform wird nur ein Teil der ersten Punktwolke und/oder nur ein Teil der zweiten Punktwolke mit der virtuellen Punktwolke verglichen. Für die Ermittlung der Pose eines jeweiligen Tiefensensors kann es ausreichen nur einen Teil der jeweiligen Punktwolken bei der Punktwolkenregistrierung zu berücksichtigen. Beispielsweise kann basierend auf dem jeweiligen Teil mit ausreichender Eindeutigkeit die notwendige Translation und Rotation der jeweiligen Punktwolke ermittelt werden. Hierbei kann beispielsweise ein besonders markanter Teil der Punktwolke ausgewählt werden, welcher beispielsweise einen Bereich mit starker Kontur abbildet. Vorteilhafterweise kann hierdurch die erforderliche Menge an zu verarbeitenden Daten reduziert werden, sodass die Punktwolkenregistrierung und damit die Ermittlung der Pose des jeweiligen Tiefensensors beschleunigt werden kann.

Gemäß einer Ausführungsform ist der nur eine Teil der ersten Punktwolke einem ersten Referenzobjekt zugehörig und/oder der nur eine Teil der zweiten Punktwolke einem zweiten Referenzobjekt zugehörig. Das erste Referenzobjekt ist beispielsweise in dem ersten Bereich angeordnet, während das zweite Referenzobjekt in dem zweiten Bereich angeordnet ist. Das erste und zweite Referenzobjekt können grundsätzlich auch das gleiche Objekt sein, wobei das Referenzobjekt in diesem Fall in einem Überschneidungsbereich des ersten und zweiten Bereichs angeordnet ist. Das jeweilige Referenzobjekt kann beispielsweise derart ausgebildet sein, dass ein Vergleich der jeweiligen Punktwolken auf einfache Weise durchführbar ist. Beispielsweise kann das jeweilige Referenzobjekt eine besondere Form aufweisen, die sich in der Form der Punktwolke widerspiegelt, sodass Gemeinsamkeiten dieses Teils der ersten bzw. zweiten Punktwolke mit der virtuellen Punktwolke einfach zu erfassen sind. Die Pose des ersten und/oder zweiten Referenzobjekts bzw. die Koordinaten der zugehörigen Punktwolke sind insbesondere bekannt.

Gemäß einer Ausführungsform wird basierend auf der ermittelten Pose des ersten Tiefensensors und der ermittelten Pose des zweiten Tiefensensors eine relative Pose des ersten Tiefensensors in Bezug auf den zweiten Tiefensensor ermittelt. Die ermittelte relative Pose des ersten Tiefensensors in Bezug auf den zweiten Tiefensensor kann beispielsweise mit einer hinterlegten vorgegebenen Posenbeziehung zwischen dem ersten Tiefensensor und dem zweiten Tiefensensor verglichen werden, um potenzielle Fehler zu erkennen. Beispielsweise kann eine Abweichung darauf hindeuten, dass einer der jeweiligen Tiefensensoren fehlerhaft ausgerichtet ist. Ferner kann die ermittelte Posenbeziehung die Erfassung von Objekten in einem Überschneidungsbereich der Erfassungsbereiche der beiden Tiefensensoren verbessern. Beispielsweise kann die ermittelte Posenbeziehung verwendet werden, um ein genaueres 3D-Bild eines entsprechenden Objekts zu erstellen.

Gemäß einer Ausführungsform werden zumindest zwei durch den ersten Tiefensensor erfasste Raumpunkte und/oder zwei durch den zweiten Tiefensensor erfasste Raumpunkte mit jeweils zugehörigen virtuellen Raumpunkten des virtuellen Abbilds verglichen. Insbesondere kann eine initiale Ausrichtung im Rahmen der Punktwolkenregistrierung basierend auf den jeweiligen zumindest zwei Raumpunkten durchgeführt werden. Dies kann manuell oder automatisch erfolgen, zum Beispiel durch Merkmalsextraktion oder anhand bekannter Geometrien. Die zu vergleichenden Raumpunkte können beispielsweise einem gleichen Objekt, insbesondere demselben Bereich oder Punkt eines Objekts zugeordnet sein. Beispielsweise können die zu vergleichenden virtuellen Raumpunkte bekannt sein, während durch den jeweiligen Tiefensensor erfassten Raumpunkte unter Verwendung von Markierungspunkten in der realen Umgebung erfasst werden. Um das Ergebnis der Punktwolkenregistrierung zu verbessern, können vorzugsweise mehr als zwei Raumpunkte verwendet werden. Die durch den ersten Tiefensensor erfassten Raumpunkte können insbesondere dem ersten Referenzobjekt zugehörig sein und/oder die durch den zweiten Tiefensensor erfassten Raumpunkte können dem zweiten Referenzobjekt zugehörig sein. Wie bereits vorab beschrieben können die jeweiligen Raumpunkte mittels Markierungspunkten an dem jeweiligen Referenzobjekt erfasst werden.

Gemäß einer Ausführungsform sind die Daten zu der virtuellen Punktwolke auf einem Speicher hinterlegt und wird die Pose des ersten und/oder zweiten Tiefensensor in regelmäßigen Abständen ermittelt und überprüft. Diese regelmäßige Überprüfung kann entweder im Rahmen einer Wartungsroutine oder als ein kontinuierlich laufender Online-Dienst erfolgen, der beispielsweise in vorgegebenen Zeitintervallen, wie etwa einmal pro Minute, ausgeführt wird. Durch diese fortlaufende Bestimmung und Validierung der Pose wird sichergestellt, dass die Tiefensensoren jederzeit präzise positioniert und ausgerichtet sind. Dies ist insbesondere in dynamischen Systemen oder bei Anwendungen mit mehreren Tiefensensoren von Bedeutung, um die Genauigkeit und Konsistenz der erzeugten Punktwolken sowie die Verlässlichkeit der darauf basierenden weiteren Verarbeitungsschritten zu gewährleisten.

Ein weiterer Aspekt der Erfindung bezieht sich auf eine Vorrichtung zur Erfassung einer Pose eines Tiefensensors, umfassend:
einen ersten Tiefensensor zur Erfassung eines ersten Bereichs einer realen Umgebung und zur Erstellung einer zugehörigen ersten Punktwolke,
eine Signalverarbeitungseinheit, welche ausgebildet ist,
ein virtuelles Abbild einer realen Umgebung in Form einer virtuellen Punktwolke mit der ersten Punktwolke zu vergleichen, und
basierend auf dem Vergleich eine Pose des ersten Tiefensensors zu ermitteln.

Wie bereits beschrieben, können die Daten zu der virtuellen Punktwolke auf einem Speicher hinterlegt sein, welcher als Teil der Signalverarbeitungseinheit ausgebildet oder ein externer Speicher sein kann. Zur Übertragung der Sensordaten ist die Signalverarbeitungseinheit insbesondere drahtlos oder kabelgebunden mit dem ersten und/oder zweiten Tiefensensor verbunden. Es wird darauf hingewiesen, dass die Erstellung der ersten und/oder zweiten Punktwolke insbesondere basierend auf den erfassen Tiefensensordaten des ersten bzw. zweiten Tiefensensors erfolgt. Die Erstellung der jeweiligen Punktwolke kann dabei entweder direkt durch den Tiefensensor selbst bzw. durch einen zugehörigen Tiefensensorchip oder durch die Signalverarbeitungseinheit erfolgen.

Für die Vorrichtung gelten die Ausführungen zu dem erfindungsgemäßen Verfahren entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1: ein Ablaufdiagramm eines Verfahrens zur Erfassung einer Pose zumindest eines Tiefensensors
- Fig. 2: eine Veranschaulichung einer Vorrichtung zur Erfassung einer Pose zumindest eines Tiefensensors

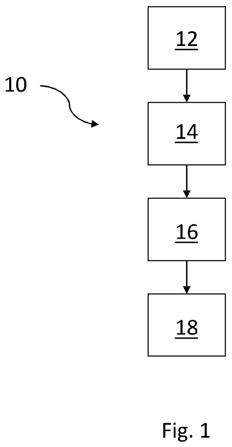

Fig. 1 zeigt ein Ablaufdiagramm eines Verfahrens 10 zur Erfassung einer Pose zumindest eines Tiefensensors 22, 24.

In einem ersten Schritt 12 wird ein virtuelles Abbild einer realen Umgebung 28 in Form einer virtuellen Punktwolke 36 erstellt. Anschließend wird in einem zweiten Schritt 14 mittels eines ersten Tiefensensors 24 zumindest ein erster Bereich 26 der realen Umgebung 28 erfasst und eine zugehörige erste Punktwolke 30 erstellt. In einem dritten Schritt 16 wird die virtuelle Punktwolke 36 mit der ersten Punktwolke 30 verglichen und in einem vierten Schritt 18 basierend auf dem Vergleich eine Pose des ersten Tiefensensors 22 ermittelt.

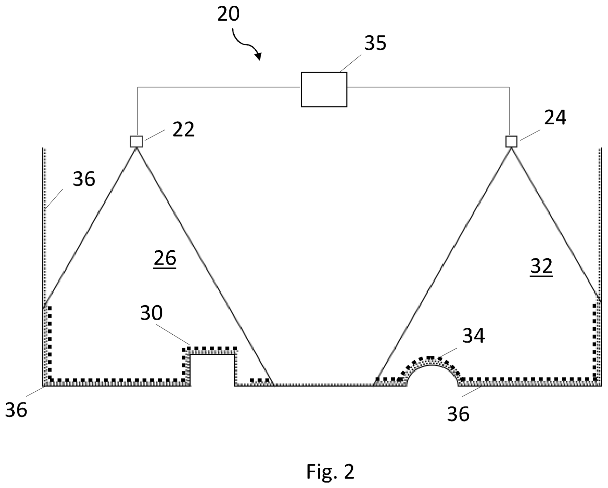

Fig. 2 zeigt eine Vorrichtung 20 zur Erfassung einer Pose zumindest eines Tiefensensors 22, 24 aus der Vogelperspektive.

Die Vorrichtung 20 umfasst einen ersten Tiefensensor 22 zur Erfassung eines ersten Bereichs 26 einer realen Umgebung 28 und zur Erstellung einer zugehörigen ersten Punktwolke 30 (dicke gepunktete Linie). Ferner umfasst die Vorrichtung 20 einen zweiten Tiefensensor 24 zur Erfassung eines zweiten Bereichs 32 der realen Umgebung 28 und zur Erstellung einer zugehörigen zweiten Punktwolke 34 (dicke gepunktete Linie). Die Vorrichtung 20 umfasst ferner eine Signalverarbeitungseinheit 35, welche mit dem ersten Tiefensensor 22 und dem zweiten Tiefensensor 24 verbunden ist und welche ausgebildet ist, ein virtuelles Abbild der realen Umgebung 28 in Form einer virtuellen Punktwolke 34 (dünne gepunktete Linie) mit der ersten Punktwolke 30 und mit der zweiten Punktwolke 34 zu vergleichen und basierend auf dem jeweiligen Vergleich eine Pose des ersten und des zweiten Tiefensensors 22, 24 zu ermitteln. Die Ermittlung der Pose eines jeweiligen Tiefensensors 22, 24 erfolgt insbesondere über eine Punktwolkenregistrierung.

Wie in Fig. 2 ersichtlich, umfasst die virtuelle Punktwolke 36 die gesamte Umgebung 28 bzw. alle dargestellten Konturen der Umgebung 28, während die durch den ersten bzw. zweiten Tiefensensor 22, 24 erzeugte Punktwolke 30, 34 auf den Erfassungsbereich des jeweiligen Tiefensensors 22,24 beschränkt ist und entsprechend tote Winkel aufweisen kann, die nicht erfasst sind. Trotz der unerfassten toten Winkel sind die Punktwolkendaten ausreichend, um eine Punktwolkenregistrierung durchzuführen und basierend auf der Punktwolkenregistrierung eine Pose des jeweiligen Tiefensensors 22, 24 zu ermitteln. Aus Fig. 2 wird auch deutlich, dass trotz fehlender Überschneidung der Sichtbereiche der beiden Tiefensensoren 22, 24 eine Ermittlung der jeweiligen Pose möglich ist. In Fig. 2 sind ist die Überlagerung der ersten Punktwolke 30 mit der virtuellen Punktwolke 36 sowie die Überlagerung der zweiten Punktwolke 34 mit der virtuellen Punktwolke 36 dargestellt. Aus Signalverarbeitungssicht wird jedoch vielmehr eine von einem jeweiligen Tiefensensor 22, 24 erfasste Punktwolke einem übereinstimmenden Bereich bzw. kongruenten Teil der virtuellen Punktwolke 36 zugeordnet. Wird der übereinstimmende Bereich korrekt ermittelt, so kann basierend darauf die Pose des jeweiligen Tiefensensors 22, 24 ermittelt werden.

### Bezugszeichenliste

- 10: Verfahren
- 12-18: Verfahrensschritte
- 20: Vorrichtung
- 22: erster Tiefensensor
- 24: zweiter Tiefensensor
- 26: erster Bereich
- 28: reale Umgebung
- 30: erste Punktwolke
- 32: zweiter Bereich
- 34: zweite Punktwolke
- 35: Signalverarbeitungseinheit
- 36: virtuelle Punktwolke

## Patentansprüche

1. Verfahren (10) zur Erfassung einer Pose zumindest eines Tiefensensors (22, 24), welches umfasst, dass:
ein virtuelles Abbild einer realen Umgebung (28) in Form einer virtuellen Punktwolke (36) erstellt wird (12),
mittels eines ersten Tiefensensors (22) zumindest ein erster Bereich (26) der realen Umgebung (28) erfasst und eine zugehörige erste Punktwolke (30) erstellt wird (14),
die virtuelle Punktwolke (36) mit der ersten Punktwolke (30) verglichen wird (16) und
basierend auf dem Vergleich eine Pose des ersten Tiefensensors (22) ermittelt wird (18).

2. Verfahren (10) nach Anspruch 1,
wobei die virtuelle Punktwolke (36) im Wesentlichen basierend auf vorgegebenen Informationen über die reale Umgebung (28) erstellt wird.

3. Verfahren (10) nach Anspruch 2,
wobei die vorgegebenen Informationen über die reale Umgebung Planungsdaten für eine Industriemaschine umfassen.

4. Verfahren (10) nach Anspruch 3,
umfassend das Herstellen der Industriemaschine gemäß den Planungsdaten für die Industriemaschine und/oder das Anbringen des ersten Tiefensensors an oder bei der Industriemaschine.

5. Verfahren (10) nach einem der vorstehenden Ansprüche,
wobei mittels eines zweiten Tiefensensors (24) ein zweiter Bereich (32) der realen Umgebung (28) erfasst und eine zugehörige zweite Punktwolke (34) erstellt wird,
wobei die virtuelle Punktwolke (36) mit der zweiten Punktwolke (34) verglichen wird und
basierend auf dem Vergleich eine Pose des zweiten Tiefensensors (24) ermittelt wird,
wobei sich der erste Bereich (26) und der zweite Bereich (32) vorzugsweise nicht oder nur teilweise überlagern.

6. Verfahren (10) nach einem der vorstehenden Ansprüche,
wobei der jeweilige Vergleich umfasst, dass für die erste und/oder zweite Punktwolke (30, 34) ein jeweils kongruenter Teil der virtuellen Punktwolke (36) ermittelt wird, wobei basierend auf dem ermittelten kongruenten Teil zumindest ein Transformationsparameter ermittelt wird, wobei basierend auf dem Transformationsparameter eine Pose des ersten und/oder zweiten Tiefensensors (22, 44) ermittelt wird.

7. Verfahren (10) nach einem der vorstehenden Ansprüche,
wobei die Pose des ersten und/oder zweiten Tiefensensors (24) mittels einer Punktwolkenregistrierung zwischen der virtuellen Punktwolke (36) und der jeweiligen ersten Punktwolke (30) und/oder zweiten Punktwolke (34) ermittelt wird.

8. Verfahren (10) nach einem der vorstehenden Ansprüche,
wobei nur ein Teil der ersten Punktwolke (30) und/oder nur ein Teil der zweiten Punktwolke (34) mit nur einem Teil der virtuellen Punktwolke (36) verglichen wird.

9. Verfahren (10) nach Anspruch 8,
wobei der nur eine Teil der ersten Punktwolke (30) einem ersten Referenzobjekt zugehörig ist und/oder der nur eine Teil der zweiten Punktwolke (34) einem zweiten Referenzobjekt zugehörig ist.

10. Verfahren (10) nach einem der vorstehenden Ansprüche,
wobei basierend auf der ermittelten Pose des ersten Tiefensensors (22) und der ermittelten Pose des zweiten Tiefensensors (24) eine relative Pose des ersten Tiefensensors (22) in Bezug auf den zweiten Tiefensensor (24) ermittelt wird.

11. Verfahren (10) nach einem der vorstehenden Ansprüche,
wobei zumindest zwei durch den ersten Tiefensensor (22) erfasste Raumpunkte und/oder zwei durch den zweiten Tiefensensor (24) erfasste Raumpunkte mit jeweils zugehörigen virtuellen Raumpunkten des virtuellen Abbilds verglichen werden.

12. Verfahren (10) nach einem der vorstehenden Ansprüche,
wobei die Daten zu der virtuellen Punktwolke (36) auf einem Speicher hinterlegt sind und die Pose des ersten und/oder zweiten Tiefensensors (24) in regelmäßigen Abständen ermittelt und überprüft wird.

13. Vorrichtung zur Erfassung einer Pose eines Tiefensensors (22, 24), umfassend:
einen ersten Tiefensensor (22) zur Erfassung eines ersten Bereichs (26) einer realen Umgebung (28) und zur Erstellung einer zugehörigen ersten Punktwolke (30),
eine Signalverarbeitungseinheit (35), welche ausgebildet ist,
ein virtuelles Abbild einer realen Umgebung (28) in Form einer virtuellen Punktwolke (36) mit der ersten Punktwolke (30) zu vergleichen, und basierend auf dem Vergleich eine Pose des ersten Tiefensensors (22) zu ermitteln.
